# EUROPEAN PATENT APPLICATION

(11) **EP 4 647 973 A1**
(43) Date of publication of application: **12.11.2025**
(21) Application number: 25174484.3
(22) Date of filing: 06.05.2025
(51) Int. Cl.: G06N 5/01, G06N 5/045, G06N 20/00

(54) **RECORDING MEDIUM, INFORMATION PROCESSING METHOD, AND INFORMATION PROCESSING DEVICE**

(30) Priority: 09.05.2024 JP 2024076641
(71) Applicant: Fujitsu Limited, Kawasaki-shi, Kanagawa 211-8588 (JP)
(72) Inventor: TAKAGI, Takuya, Kawasaki-shi, Kanagawa, 211-8588 (JP); KANAMORI, Kentaro, Kawasaki-shi, Kanagawa, 211-8588 (JP)
(74) Representative: Hoffmann Eitle

(57) **Abstract**

A method for processing information for a first and second decision tree that are mutually different, the former representing, by a path from a root to a leaf, a condition for classifying multiple data from which a causal graph is generated, the latter being based on the former, the method being executed by a computer and including: generating a first causal graph, for each path from the root to a leaf of the first decision tree, based on data that among the multiple data, meets the condition; after generating the first causal graph, repeatedly performing until an end condition is satisfied: generating a second causal graph, for each path from the root to a leaf of the second decision tree, based on the data that meets the condition; and updating the first decision tree with the second decision tree when a second score evaluating a likelihood of the second causal graph is better than a first score evaluating a likelihood of the first causal graph.

## Description

### FIELD

The embodiments discussed herein are related to a recording medium, an information processing method, and an information processing device.

### BACKGROUND

Conventionally, there is a causal discovery technique that generates a causal graph expressing the causal relationship between multiple items based on multiple pieces of data representing a combination of values of the multiple items. The causal graph is, for example, a directed graph. In addition, it may be desired to classify multiple pieces of data under different conditions and generate a causal graph corresponding to the different conditions. For example, it may be desired to classify multiple pieces of data under a gender condition and generate a causal graph corresponding to males and a causal graph corresponding to females.

As an example of the prior art, when a graph changes in which each node has a factor degree indicating the degree of a factor for the state of the graph, any node of the graph after the change is deleted whose importance based on the factor degree of the node of the graph before the change is equal to or less than a threshold. For example, refer to International Publication No. WO 2020/153150.

### SUMMARY

It is an object in one aspect of the embodiments to at least solve the above problems in the conventional technologies.

According to an aspect of an embodiment, a computer-readable recording medium stores therein, a program for causing a computer to execute a process for processing information for a first decision tree and a second decision tree that are mutually different, the first decision tree representing, by a path from a root to a leaf, a condition for classifying a plurality of data from which a causal graph is to be generated, the second decision tree being based on the first decision tree, the process including: generating a first causal graph, for each path from the root to a leaf of the first decision tree, based on data that among the plurality of data, meets the condition represented by the path; and after generating the first causal graph, repeatedly performing until a predetermined end condition is satisfied: generating a second causal graph, for each path from the root to a leaf of the second decision tree, based on the data that among the plurality of data, meets the condition represented by the path; and updating the first decision tree with the second decision tree when a second score evaluating a likelihood of the generated second causal graph is better than a first score evaluating a likelihood of the first causal graph.

### BRIEF DESCRIPTION OF DRAWINGS

Fig. 1 is an explanatory diagram depicting an example of an information processing method according to an embodiment.
Fig. 2 is an explanatory diagram depicting an example of an information processing system 200.
Fig. 3 is a block diagram depicting an example of a hardware configuration of an information processing device 100.
Fig. 4 is a block diagram depicting an example of a functional configuration of the information processing device 100.
Fig. 5 is an explanatory diagram depicting an example of the contents of a data management table 500.
Fig. 6 is an explanatory diagram depicting an example of a structure of a decision tree 600.
Fig. 7 is an explanatory diagram depicting an example of operation of the information processing device 100.
Fig. 8 is a flowchart depicting an example of an overall processing procedure.

### DESCRIPTION

First, problems associated with the conventional technique are discussed. In the conventional technique, there is a problem in that it is difficult to determine under what condition multiple pieces of data should be classified and corresponding to what condition a causal graph should be generated. For example, when a user lacks prior knowledge of multiple pieces of data, it is not possible to manually set a proper condition for generating a causal graph.

Embodiments of a recording medium, an information processing method, and an information processing device according to the present invention are described in detail with reference to the accompanying drawings.

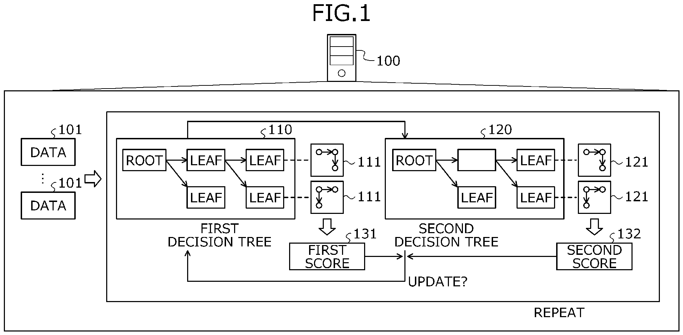

Fig. 1 is an explanatory diagram depicting an example of an information processing method according to an embodiment. An information processing device 100 is a computer for setting proper conditions for generating a causal graph. The information processing device 100 is, for example, a server or a personal computer (PC). The causal graph expresses a causal relationship between multiple items. The multiple items include, for example, an item corresponding to an objective variable and an item corresponding to an explanatory variable.

The causal graph is, for example, a directed graph including multiple nodes each representing a different item, and connecting the nodes with effective edges. The directed edges represent causal relationships between items corresponding to the connected nodes. The value of an item represented by a node that is a destination of a directed edge depends on the value of an item represented by a node that is a source of the directed edge. The directed edge has, for example, a parameter representing a function for calculating the value of an item represented by a destination node from the value of an item represented by a source node.

Conventionally, there is a causal discovery technique that generates a causal graph based on multiple pieces of data representing combinations of values of multiple items. Examples of a causal discovery technique include LinGAM and No-tears. The multiple pieces of data are organized into table-structured data. For example, each row of the table-structured data corresponds to one piece of data. The multiple pieces of data may be a collection of data related to human attributes and disease risks. The human attributes correspond to the items.

Here, when one causal graph is generated for the pieces of data overall, the accuracy of the causal graph may decrease. The accuracy is the degree to which the causal graph properly expresses the causal relationship between items. For example, different causal relationships may be established between the same items depending on conditions, and one causal graph may not be able to properly express the causal relationship between specific items. For example, different causal relationships with respect to disease risks may be established between the same items depending on conditions related to a person's sex, age, height, weight, blood type, etc.

For this reason, it is sometimes desirable to classify multiple pieces of data by multiple conditions and generate multiple causal graphs corresponding to different conditions. For example, the accuracy of the causal graph may be improved when multiple causal graphs corresponding to different conditions are generated, as compared to when only one causal graph is generated, and a user who refers to the causal graphs may be able to properly understand the causal relationship between items.

For example, it may be desired to classify multiple pieces of data by multiple conditions related to a person's gender, age, height, weight, blood type, etc., and generate multiple causal graphs corresponding to different conditions. For example, it may be desired to classify multiple pieces of data by a condition of being male and a condition of being female, and generate a causal graph corresponding to the condition of being male and a causal graph corresponding to the condition of being female.

However, conventionally, there is a problem in that it is difficult to determine under what conditions multiple pieces of data should be classified and according to which conditions a causal graph should be generated. For example, when a user does not have sufficient prior knowledge of multiple pieces of data, it is difficult to manually set proper conditions for generating a causal graph. In addition, this leads to an increase in the workload of an operator who manually sets proper conditions for generating a causal graph.

In response to this, a method is conceivable in which multiple conditions having a high correlation with an item corresponding to an objective variable are listed, and a causal graph is generated for each condition. In this method, multiple conditions cannot be set exclusively. Therefore, when new data that simultaneously satisfies two or more conditions exists, it is difficult for a user to determine which causal graph is preferable to refer to. In addition, the magnitude of correlation with an item corresponding to an objective variable tends not to be related to the accuracy of a causal graph. Therefore, this method may lead to a decrease in the accuracy of the causal graph generated for each condition.

Thus, in this embodiment, an information processing method capable of setting a proper condition for generating a causal graph is described.

In Fig. 1, the information processing device 100 stores multiple pieces of data 101 as sources of generating a causal graph. The information processing device 100 executes the following process (1-1) and the following process (1-2) based on the multiple pieces of data 101, and then repeatedly executes a series of processes including the following process (1-3) and the following process (1-4) until a predetermined end condition is satisfied.

This allows the information processing device 100 to identify a decision tree that represents a proper condition for generating a causal graph. The decision tree includes nodes that represent elements forming a condition for classifying multiple pieces of data 101 to generate a causal graph, and represents a condition for classifying multiple pieces of data 101 to generate a causal graph along a path from the root to the leaves. The content of the element relates to at least any one of the items. For example, the content of the element includes comparing a value of any of the items with a threshold value.

(1-1) Prior to the series of processes, the information processing device 100 sets a decision tree to be an initial state in a first decision tree 110 that represents a condition for classifying multiple pieces of data 101 to generate a causal graph along a path from the root to the leaves. The information processing device 100 sets, for example, a randomly generated decision tree to be an initial state in the first decision tree 110. For example, the information processing device 100 randomly selects any of the items among the multiple items, randomly sets a condition for any of the selected items, generates a decision tree representing the set condition, and sets the generated decision tree in the first decision tree 110.

(1-2) The information processing device 100 identifies, for each path from the root to the leaves of the current first decision tree 110, data 101 that satisfies the condition represented by the path, among the multiple pieces of data 101. The information processing device 100 generates a first causal graph 111 for the current first decision tree 110, based on the identified data 101 for each path from the root to the leaves of the current first decision tree 110. The first causal graph 111 is generated, for example, by a method such as the above-mentioned LinGAM or No-tears.

The information processing device 100 calculates a first score 131 that evaluates the likelihood of the generated first causal graph 111. The first score 131 is, for example, a statistic value of ∥X-XW_1∥^2 corresponding to the first causal graph 111. X is a data matrix representing the multiple pieces of data 101. W_1 is an adjacency matrix of the first causal graph 111. The adjacency matrix includes, for example, a function that allows the value of one item having a causal relationship to be calculated from the value of the other item as a component. The statistical value of ∥X-XW_1∥^2 is the maximum value, minimum value, average value, median value, or mode value of ∥X-XW_1∥^2 corresponding to each first causal graph 111. The first score 131 indicates that the smaller the value, the better the evaluation.

(1-3) The information processing device 100 generates a second decision tree 120 that is different from the current first decision tree 110 based on the current first decision tree 110. It is preferable that the information processing device 100 generates a different second decision tree 120 each time the series of processes is executed. The information processing device 100 generates the second decision tree 120 by, for example, randomly adding a node representing an element forming a condition to the first decision tree 110, deleting a node representing an element forming a condition, or changing the content of an element forming a condition represented by a node. The change is, for example, changing a threshold value to be compared with the value of any item among the contents of the element. In this way, the information processing device 100 can prepare a second decision tree 120 that classifies multiple pieces of data and enables a condition for generating a causal graph to be considered in addition to the first decision tree 110.

The information processing device 100 identifies, among the multiple pieces of data 101, data 101 that corresponds to a condition represented by each path from the root to the leaves of the generated second decision tree 120. The information processing device 100 generates a second causal graph 121 for the generated second decision tree 120 based on the identified data 101 for each path from the root to the leaves of the generated second decision tree 120. The second causal graph 121 is generated by, for example, a method such as the above-mentioned LinGAM or No-tears.

(1-4) The information processing device 100 obtains a first score 131. The information processing device 100 calculates a second score 132 that evaluates the likelihood of the generated second causal graph 121. The second score 132 is, for example, a statistical value of ∥X-XW_2∥^2 corresponding to the second causal graph 121. W_2 is an adjacency matrix of the second causal graph 121. The adjacency matrix includes, as components, functions that enable the value of one item having a causal relationship to be calculated from the value of the other item. The ∥X-XW_2∥^2 statistical value is the maximum value, minimum value, average value, median value, or mode value of ∥X-XW_2∥^2 corresponding to each second causal graph 121. The second score 132 indicates that the smaller the value, the better the evaluation.

The information processing device 100 judges whether the second score 132 indicates a better evaluation than the first score 131. For example, the information processing device 100 judges that the evaluation is better when the value of the second score 132 is smaller than the first score 131. When the second score 132 indicates a better evaluation than the first score 131, the information processing device 100 updates the current first decision tree 110 with the generated second decision tree 120. In this way, the information processing device 100 can identify the first decision tree 110 that represents a proper condition for classifying multiple pieces of data and generating a causal graph.

The information processing device 100 may update the current first decision tree 110 with the generated second decision tree 120 and may set the second causal graph 121 in the first causal graph 111 for each path from the root to a leaf of the first decision tree 110. This allows the information processing device 100 to avoid generating the first causal graph 111 again.

Furthermore, when the second score 132 indicates a better evaluation than the first score 131, the information processing device 100 may update the current first score 131 with the calculated second score 132. This allows the information processing device 100 to obtain the first score 131 without recalculating it and thus reduces the amount of processing.

(1-5) The information processing device 100 may output the current first decision tree 110 when a predetermined end condition is satisfied. The output format may be, for example, display on a display, print output on a printer, transmission to another computer, or storage to a storage area. The information processing device 100 may output, for example, the current first decision tree 110, and output the first causal graphs 111 corresponding to each leaf of the current first decision tree 110 in association with the leaf. This allows the information processing device 100 to make proper conditions for classifying multiple pieces of data and for generating a causal graph, the conditions being available externally.

In this way, the information processing device 100 can obtain the first causal graph 111 with higher accuracy than a single causal graph for the pieces of data 101 overall. The information processing device 100 can make it possible to properly express the causal relationships between each item by condition, using the multiple first causal graphs 111. The information processing device 100 can make it easier for a user who refers to the first causal graph 111 to properly grasp the causal relationships between each item.

Furthermore, the information processing device 100 can suppress an increase in the workload of an operator who sets multiple conditions for classifying multiple pieces of data and for generating the first causal graph 111. The information processing device 100 can exclusively set multiple conditions for classifying multiple pieces of data and generating the first causal graph 111 by the first decision tree 110. Hence, when new data 101 exists, a user can properly determine which first causal graph 111 is preferable to refer to according to the first decision tree 110.

Here, while a case where the function of the information processing device 100 is realized by a single computer has been described, configuration is not limited hereto. For example, the function of the information processing device 100 may be realized by coordination between multiple computers. For example, the function of the information processing device 100 may be realized on a cloud.

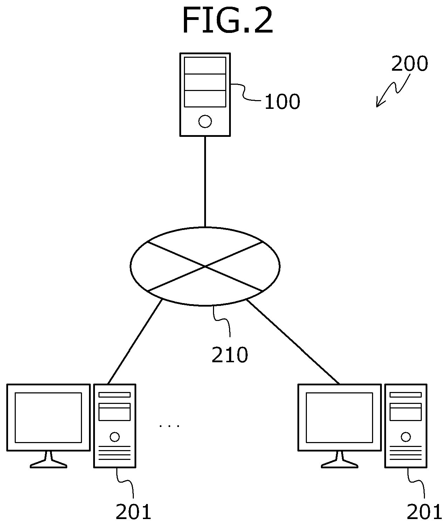

Next, an example of an information processing system 200 to which the information processing device 100 depicted as Fig. 1 is applied is described with reference to Fig. 2.

Fig. 2 is an explanatory diagram depicting an example of an information processing system 200. In Fig. 2, the information processing system 200 includes the information processing device 100 and a client device 201.

In the information processing system 200, the information processing device 100 and the client device 201 are connected via a wired or wireless network 210. The network 210 is, for example, a local area network (LAN), a wide area network (WAN), the Internet, or the like.

The information processing device 100 is a computer for setting proper conditions for generating a causal graph. The information processing device 100 obtains a processing request for classifying multiple pieces of data that are the source for generating a causal graph and for setting multiple proper conditions for generating a causal graph. The processing request includes, for example, multiple pieces of data that are the source for generating a causal graph. The processing request may further request generation of causal graphs corresponding to each of the multiple conditions.

The information processing device 100 obtains a processing request by, for example, receiving the processing request from the client device 201. The information processing device 100 may obtain a processing request by, for example, receiving an input of the processing request, based on an operation input by a user.

The information processing device 100 stores multiple pieces of data that are the source of generating a causal graph, based on the processing request. The data represents, for example, a combination of values of multiple items. The multiple items include, for example, an item corresponding to an explanatory variable and an item corresponding to an objective variable. The information processing device 100 stores, for example, tabular data that summarizes the multiple pieces of data.

In response to the processing request, the information processing device 100 repeatedly executes an update process that updates a decision tree that represents multiple conditions for classifying multiple pieces of data and generating a causal graph until a predetermined end condition is satisfied. The decision tree includes nodes that represent elements that form conditions for classifying the multiple pieces of data and generating a causal graph, and the decision tree represents conditions for classifying the multiple pieces of data and generating a causal graph in a path from the root to the leaves. For example, in the decision tree, nodes other than the leaves represent elements forming a condition for classifying multiple pieces of data and generating a causal graph. For example, a combination of elements represented by nodes other than the leaves on the path from the root to the leaves represents a condition for classifying the multiple pieces of data and generating a causal graph.

The content of the element is, for example, a judgment regarding at least any one of the items. For example, the content of the element includes, for example, a judgment as to whether the value of any item is at least equal to a threshold. For example, the content of the element includes, for example, a judgment as to whether the value of any item is a specified value.

The information processing device 100 sets a first decision tree, for example, prior to the update process. For example, the information processing device 100 sets a randomly generated decision tree as an initial state of the first decision tree. For example, prior to the update process, the information processing device 100 generates a first causal graph corresponding to each leaf of the first decision tree. Prior to the update process, the information processing device 100 calculates a first score for evaluating the likelihood of the first causal graph.

The information processing device 100, for example, repeatedly executes an update process on the first decision tree until a predetermined end condition is satisfied, thereby obtaining a final first decision tree. The final first decision tree is the first decision tree when the predetermined end condition is satisfied. The final first decision tree represents multiple proper conditions for classifying multiple pieces of data and generating a causal graph.

The update process, for example, includes generating a second decision tree by modifying all or a part of the first decision tree. The update process, for example, includes generating a second causal graph corresponding to each leaf of the second decision tree. The update process, for example, includes obtaining a first score for evaluating the likelihood of the first causal graph. The update process, for example, includes calculating a second score for evaluating the likelihood of the second causal graph.

The update process, for example, includes updating the first decision tree with the second decision tree when the second score indicates a better evaluation than the first score. The update process includes, for example, when the second score indicates that the evaluation is better than the first score, setting the already-generated second causal graph to the first causal graph corresponding to each leaf of the first decision tree. The update process includes, for example, updating the first score with the second score, when the second score indicates that the evaluation is better than the first score.

The information processing device 100 outputs the final first decision tree. The information processing device 100 transmits, for example, the final first decision tree to the client device 201. The information processing device 100 may output, for example, the final first decision tree so that the user can refer to the final first decision tree.

The information processing device 100 may output, together with the final first decision tree, the first causal graph corresponding to each leaf of the final first decision tree. The information processing device 100 transmits, for example, the first causal graph corresponding to each leaf of the final first decision tree to the client device 201 in association with each leaf. The information processing device 100 may, for example, output a first causal graph corresponding to each leaf of the final first decision tree in association with each leaf so that the user can refer thereto.

Also, the information processing device 100 may output a condition represented by a path from the root of the final first decision tree to each leaf, instead of the final first decision tree itself. The information processing device 100 transmits, for example, a condition represented by a path from the root of the final first decision tree to each leaf, to the client device 201. The information processing device 100 may, for example, output a condition represented by a path from the root of the final first decision tree to each leaf so that the user can refer thereto.

Also, the information processing device 100 may output a first causal graph corresponding to a condition together with the condition represented by the path from the root of the final first decision tree to each leaf. The information processing device 100 transmits, for example, a first causal graph corresponding to the condition represented by the path from the root of the final first decision tree to each leaf to the client device 201 in association with the condition. The information processing device 100 may, for example, output a first causal graph corresponding to a condition represented by a path from the root to each leaf of the final first decision tree in association with the condition so as to be referenced by the user. The information processing device 100 is, for example, a server or a PC.

The client device 201 is a computer that generates a processing request. The processing request requests the setting of proper conditions for generating a causal graph by classifying multiple pieces of data that are the source of generating the causal graph. The processing request includes, for example, multiple pieces of data that are the source of generating the causal graph. The processing request may further request generation of a causal graph corresponding to each of the multiple conditions. The client device 201 generates the processing request based on, for example, operation input of a user. The client device 201 transmits the generated processing request to the information processing device 100.

The client device 201 receives the final first decision tree. The client device 201 outputs the final first decision tree so as to be referenced by the user. The client device 201 may receive a first causal graph corresponding to each leaf of the final first decision tree together with the final first decision tree. The client device 201 may output a first causal graph corresponding to each leaf of the final first decision tree together with the final first decision tree so that the user can refer to it.

The client device 201 may receive a condition represented by a path from the root of the final first decision tree to each leaf instead of the final first decision tree itself. The client device 201 may output, for example, a condition represented by a path from the root of the final first decision tree to each leaf so that the user can refer to it. The client device 201 may receive a first causal graph corresponding to a condition represented by a path from the root of the final first decision tree to each leaf. The information processing device 100 may output, for example, a first causal graph corresponding to a condition represented by a path from the root of the final first decision tree to each leaf in association with the condition so that the user can refer to it. The client device 201 is, for example, a PC, a tablet terminal, or a smartphone.

Here, while a case has been described where the information processing device 100 is a computer different from the client device 201, configuration is not limited hereto. For example, the information processing device 100 may have the functions of the client device 201 and also operate as the client device 201.

Next, application examples of the information processing system 200 are described. For example, the information processing system 200 may be applied to a medical field. In this case, the information processing device 100 may classify multiple pieces of data, for example, based on multiple pieces of data which are a collection of data related to human attributes and disease risk; and for each proper condition, generate a causal graph and provide the same to the user. In response to this, the user may refer to the causal graph for each proper condition to understand which attributes of people have a high risk of disease.

Also, for example, the information processing system 200 may be applied to an industrial field. In this case, the information processing device 100 may classify multiple pieces of data, for example, based on multiple pieces of data which are a collection of data related to human attributes and turnover rate, generate a causal graph, and provide the same to the user. In response to this, the user may refer to the causal graph for each proper condition to understand which attributes of people have a high turnover rate.

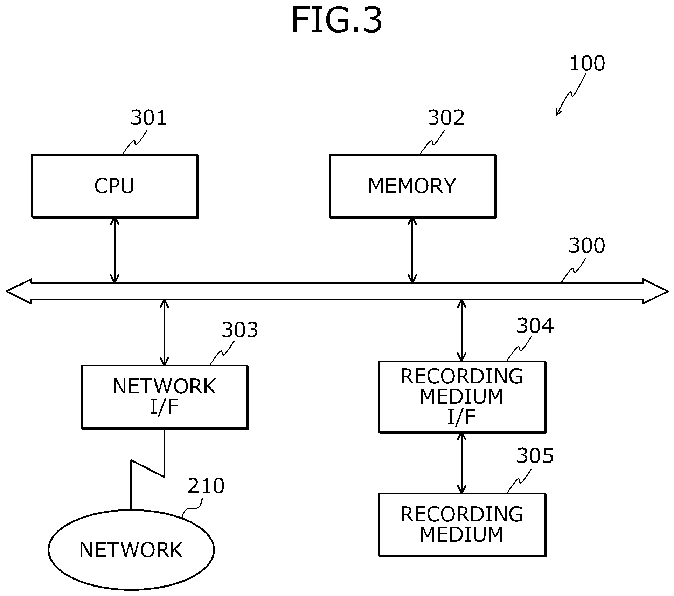

An example of a hardware configuration of the information processing device 100 is described with reference to Fig. 3.

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. The components are connected to each other by a bus 300.

Here, the CPU 301 governs overall control of the information processing device 100. The memory 302, for example, includes a read-only memory (ROM), a random-access memory (RAM), and a flash ROM. For example, the flash ROM and/or the ROM store therein various programs and the RAM is used as a work area of the CPU 301. Programs stored by the memory 302 are loaded onto the CPU 301, whereby encoded processes are executed by the CPU 301.

The network I/F 303 is connected to the network 210 through a communications line and is connected to other computers via the network 210. Further, the network I/F 303 administers an internal interface with the network 210 and controls the input and output of data from other computers. The network I/F 303, for example, is a modem, a LAN adapter, etc.

The recording medium I/F 304, under the control of the CPU 301, controls the reading and writing of data with respect to the recording medium 305. The recording medium I/F 304, for example, is a disk drive, a solid-state drive (SSD), a universal serial bus (USB) port, etc. The recording medium 305 is a nonvolatile memory that stores therein data written thereto under the control of the recording medium I/F 304. The recording medium 305, for example, is a disk, a semiconductor memory, a USB memory, etc. The recording medium 305 may be removable from the information processing device 100.

In addition to the components above, the information processing device 100 may have, for example, a keyboard, a mouse, a display, a printer, a scanner, a microphone, a speaker, etc. Further, the information processing device 100 may have the recording medium I/F 304 and the recording medium 305 in plural. Further, the information processing device 100 may omit the recording medium I/F 304 and the recording medium 305.

An example of a hardware configuration of the client device 201 is a same as the example of the hardware configuration of the information processing device 100 depicted in Fig. 3 and thus, description thereof is omitted herein.

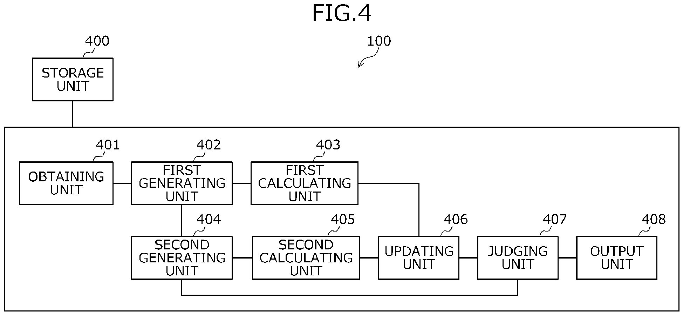

Next, an example of a functional configuration of the information processing device 100 is described with reference to Fig. 4.

Fig. 4 is a block diagram depicting an example of the functional configuration of the information processing device 100. The information processing device 100 includes a storage unit 400, an obtaining unit 401, a first generating unit 402, a first calculating unit 403, a second generating unit 404, a second calculating unit 405, an updating unit 406, a judging unit 407, and an output unit 408.

The storage unit 400 is realized by a storage area such as the memory 302 or the recording medium 305 depicted in Fig. 3. In the following, while a case where the storage unit 400 is included in the information processing device 100 is described, configuration is not limited hereto. For example, the storage unit 400 may be included in a device different from the information processing device 100, and the stored contents of the storage unit 400 may be referred to by the information processing device 100.

The obtaining unit 401 to the output unit 408 function as an example of a control unit. For example, respective functions of the obtaining unit 401 to the output unit 408 are realized by, for example, the CPU 301 executing a program stored in a storage area such as the memory 302 or the recording medium 305 depicted in Fig. 3, or by the network I/F 303. The processing results of each functional unit are stored to a storage area such as the memory 302 or the recording medium 305 depicted in Fig. 3.

The storage unit 400 stores various pieces of information that are referred to or updated in the processing of each functional unit. The storage unit 400 stores multiple pieces of data that are the source of generating a causal graph. The data represents, for example, a combination of values of multiple items. The causal graph expresses a causal relationship between the multiple items. The multiple items include, for example, an item corresponding to an objective variable and an item corresponding to an explanatory variable. The causal graph is, for example, a directed graph that includes multiple nodes representing different items and connects the nodes with effective edges. The directed edges represent a causal relationship between items corresponding to the nodes that are connected by the edges. The value of an item represented by a node connected to a directed edge depends on the value of an item represented by a node from which the directed edge is connected. The directed edge has, for example, a parameter representing a function that calculates the value of an item represented by the node to which the directed edge is connected from the value of an item represented by the node from which the directed edge is connected.

The obtaining unit 401 obtains various information used in the processing by the functional units. The obtaining unit 401 stores the obtained various information in the storage unit 400 or outputs the information to each functional unit. The obtaining unit 401 may also output the various information stored in the storage unit 400 to each functional unit. The obtaining unit 401 obtains various information based on, for example, operation input of a user. The obtaining unit 401 may receive various information from, for example, a device different from the information processing device 100.

The obtaining unit 401 obtains, for example, a processing request that requests setting of proper conditions for classifying multiple pieces of data and generating a causal graph. The processing request includes, for example, multiple pieces of data. The obtaining unit 401, for example, obtains a processing request by receiving an input of the processing request. The obtaining unit 401, for example, may obtain a processing request by receiving a processing request from another computer. The other computer is, for example, the client device 201.

The obtaining unit 401, for example, obtains multiple pieces of data. The obtaining unit 401, for example, obtains multiple pieces of data by extracting the multiple pieces of data from the processing request. The obtaining unit 401, for example, may obtain multiple pieces of data by receiving an input of the multiple pieces of data. The obtaining unit 401, for example, may obtain multiple pieces of data by receiving the multiple pieces of data from the other computer. The other computer is, for example, the client device 201.

The obtaining unit 401 may receive a start trigger for starting processing of any of the functional units. The start trigger may be, for example, a predetermined operation input by a user. The start trigger may be, for example, a reception of predetermined information from the other computer. The start trigger may be, for example, an output of predetermined information by any of the functional units. The obtaining unit 401 may receive, for example, a processing request as a start trigger for starting the processing by the first generating unit 402, the first calculating unit 403, the second generating unit 404, the second calculating unit 405, and the updating unit 406.

The first generating unit 402 sets a first decision tree that represents a condition for classifying multiple pieces of data and generating a causal graph as a path from a root to a leaf. The first generating unit 402 may set, for example, a decision tree that represents a random condition, as the first decision tree. The first generating unit 402 may set, as the first decision tree, for example, a decision tree that represents a random condition, based on multiple pieces of data. This allows the first generating unit 402 to prepare a first decision tree that is to be updated.

The first calculating unit 403 identifies, for each path from the root to a leaf of the first decision tree, data that corresponds to the condition represented by the path among the multiple pieces of data. The first calculating unit 403 generates a first causal graph, based on the identified data for each path from the root to the leaves of the first decision tree.

The first calculating unit 403 calculates a first score for evaluating the likelihood of the generated first causal graph. For example, the first score indicates that the smaller is the value, the better is the evaluation. The first calculating unit 403 calculates a first score that indicates, for example, that the smaller is the absolute value of the difference of the product of a data matrix representing multiple pieces of data and an adjacency matrix of the first causal graph and the data matrix, the better is the evaluation. This enables the first calculating unit 403 to evaluate the desirability of the first decision tree.

The second generating unit 404 generates a second decision tree different from the current first decision tree, based on the current first decision tree. For example, the second generating unit 404 generates a second decision tree obtained by changing all or a part of the first decision tree. The second generating unit 404 generates the second decision tree by, for example, randomly adding a node representing an element forming a condition, deleting a node representing an element forming a condition, or changing an element forming a condition represented by a node to the first decision tree. For example, the second generating unit 404 randomly selects one of the methods of adding a node representing an element forming a condition, deleting a node representing an element forming a condition, or changing an element forming a condition represented by a node. For example, the second generating unit 404 identifies multiple patterns of changing the first decision tree that can be implemented according to the selected method.

More specifically, the second generating unit 404 may identify multiple nodes representing elements forming a condition that can be added to the first decision tree and thereby may identify patterns of adding each node. More specifically, the second generating unit 404 may identify multiple nodes representing elements forming a condition that can be deleted from the first decision tree and thereby may identify patterns of deleting each node. For example, the second generating unit 404 evaluates which pattern is preferable, and generates the second decision tree with the most preferable pattern. Thus, the second generating unit 404 can prepare a second decision tree to be compared with the first decision tree. For example, the second generating unit 404 may randomly generate a second decision tree different from the current first decision tree, based on the current first decision tree.

The second calculating unit 405 identifies data that corresponds to a condition represented by each path from the root to the leaves of the second decision tree among the multiple pieces of data. The second calculating unit 405 generates a second causal graph for the second decision tree based on the identified data for each path from the root to the leaves of the second decision tree.

The second calculating unit 405 calculates a second score for evaluating the likelihood of the generated second causal graph. For example, the second score indicates that the smaller is the value, the better is the evaluation. For example, the second calculating unit 405 calculates a second score that indicates that the smaller is the absolute value of the difference of a data matrix representing the multiple pieces of data and the product of the data matrix and the adjacency matrix of the second causal graph, the better is the evaluation. This allows the second calculating unit 405 to evaluate the desirability of the second decision tree.

When the calculated second score indicates that the evaluation is better than the calculated first score, the updating unit 406 updates the first decision tree with the second decision tree. When the calculated second score indicates that the evaluation is better than the calculated first score, the updating unit 406 sets a second causal graph as the first causal graph for each path from the root to a leaf of the updated first decision tree. When the calculated second score indicates that the evaluation is better than the calculated first score, the updating unit 406 updates the first score with the second score. This allows the updating unit 406 to optimize the first decision tree. When the process of the second generating unit 404 and the second calculating unit 405 is repeated, the updating unit 406 can avoid the need to calculate the first score again.

The judging unit 407 controls the second generating unit 404 and the second calculating unit 405 so as to repeatedly execute the processes of the second generating unit 404 and the second calculating unit 405 until a predetermined end condition is satisfied. The predetermined end condition is, for example, that the processes executed by the second generating unit 404 and the second calculating unit 405 are executed a specified number of times. The predetermined end condition may be, for example, that the first score becomes less than a predetermined threshold value. The predetermined end condition may be, for example, that the elapsed time from the first execution of the process of the second generating unit 404 and the second calculating unit 405 exceeds an allowable time. This allows the judging unit 407 to repeatedly optimize the first decision tree and obtain a first decision tree that represents a proper condition for classifying multiple pieces of data and generating a causal graph.

The output unit 408 outputs the processing result of at least any one of the functional units. The output format is, for example, display on a display, print output to a printer, transmission to an external device via the network I/F 303, or storage in a storage area such as the memory 302 or the recording medium 305. In this way, the output unit 408 can notify the user of the processing result of at least any one of the functional units, thereby improving the convenience of the information processing device 100.

The output unit 408 outputs the updated first decision tree, for example, when a predetermined end condition is satisfied. For example, the output unit 408 outputs the updated first decision tree so that the user can refer thereto. For example, the output unit 408 transmits the updated first decision tree to another computer. The other computer is, for example, the client device 201. In this way, the output unit 408 can make the proper condition for classifying multiple pieces of data and generating a causal graph available externally.

For example, when a predetermined end condition is satisfied, the output unit 408 further outputs, for each path from the root to a leaf of the first decision tree, a first causal graph generated based on data that, among the multiple pieces of data, corresponds to the condition represented by the path, the first causal graph being output in association with the leaf. For example, for each path from the root to a leaf of the first decision tree, the output unit 408 outputs, in association with the leaf and so as to be referable by a user, the first causal graph that is generated based on data that among the multiple pieces of data, corresponds to the condition represented by the path.

For each path from the root to a leaf of the first decision tree, the output unit 408 transmits the first causal graph generated based on data that, among the multiple pieces of data, corresponds to the condition represented by the path, the generated first causal graph being transmitted in association with the leaf, to another computer. The other computer is, for example, the client device 201. In this way, the output unit 408 can make the first causal graph, which corresponds to a proper condition for classifying multiple pieces of data and generating a causal graph, available externally.

When a predetermined end condition is satisfied, the output unit 408 may output a condition represented by a path from the root to a leaf of the updated first decision tree instead of the updated first decision tree itself. For example, for each path from the root to a leaf of the updated first decision tree, the output unit 408 transmits a condition represented by the path to the client device 201. For example, for each path from the root to a leaf of the updated first decision tree, the output unit 408 may output a condition represented by the path so that the user can refer to the condition represented by the path. In this way, the output unit 408 can make proper conditions for classifying multiple pieces of data and generating a causal graph available externally.

for each path from the root to a leaf of the updated first decision tree, the output unit 408 may output a first causal graph corresponding to the condition together with the condition represented by the path. The output unit 408 transmits, for example, for each path from the root to the leaves of the updated first decision tree, a first causal graph that corresponds to a condition represented by the path, the first causal graph being transmitted in association with the condition to the client device 201. For example, the output unit 408 may output, for each path from the root to the leaves of the updated first decision tree, a first causal graph that corresponds to a condition represented by the path, the first causal graph being transmitted in association with the condition so that the user can refer to the first causal graph. In this way, the output unit 408 can make the first causal graph that corresponds to a proper condition for classifying multiple pieces of data and generating a causal graph available externally.

Here, while a case where the information processing device 100 includes the obtaining unit 401, the first generating unit 402, the first calculating unit 403, the second generating unit 404, the second calculating unit 405, the updating unit 406, the judging unit 407, and the output unit 408 has been described, configuration is not limited hereto. For example, the information processing device 100 may omit any of the functional units. For example, the information processing device 100 may cooperate with another computer having any of the functional units.

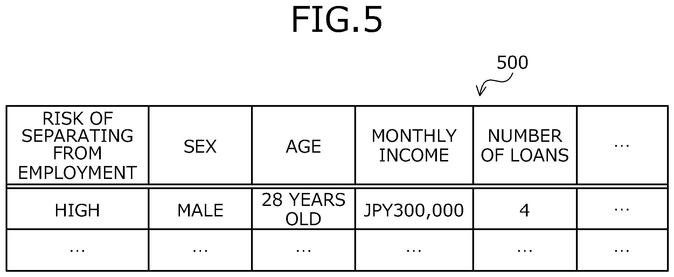

Next, an example of operation of the information processing device 100 is described with reference to Figs. 5 to 7. In the example depicted Figs. 5 to 7, the information processing device 100 obtains multiple pieces of data from which a causal graph is generated. The data includes, for example, values of a person's attributes and a value of the risk of separating from employment. The attributes include, for example, age, sex, monthly income, number of unpaid loans, career aspirations, overtime hours, and salary difference with other companies in the same industry.

The information processing device 100 uses a data management table 500 described later in Fig. 5 to thereby store the received multiple pieces of data from which a causal graph is generated. Next, an example of the contents of the data management table 500, which is stored by the information processing device 100 and which summarizes multiple pieces of data from which a causal graph is generated, is described with reference to Fig. 5.

Fig. 5 is an explanatory diagram depicting an example of the contents of the data management table 500. The data management table 500 is realized by, for example, a storage area such as the memory 302 or the recording medium 305 of the information processing device 100 depicted in Fig. 3. As depicted in Fig. 5, the data management table 500 has fields for the risk of separating from employment, age, sex, monthly income, and number of loans. The data management table 500 may have fields for career orientation, overtime hours, and salary difference with other companies in the same industry.

The data management table 500 stores data as records by setting information for each person in each field. The risk of separating from employment of a person is set in the field for risk of separating from employment. The sex of a person is set in the field for sex. The age of a person is set in the field for age. The monthly income field is set in the field for the monthly income of a person. The number of loans field is set to the field for the number of unpaid loans of a person.

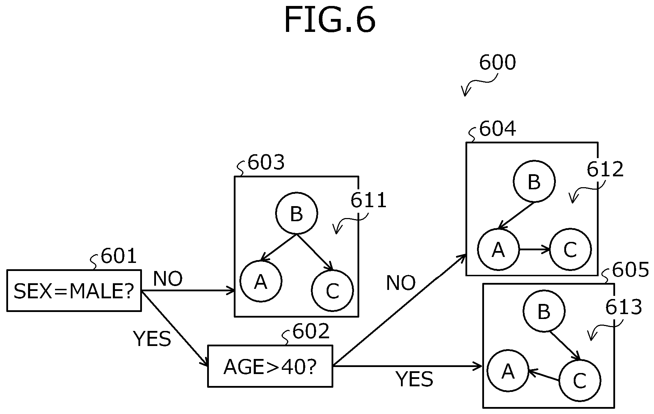

The information processing device 100 refers to the data management table 500, classifies multiple pieces of data, and expresses proper conditions for generating a causal graph, and generates a decision tree 600 in which the leaves are associated with the causal graphs. Next, moving on to the explanation of Fig. 6, an example of the structure of a decision tree 600 is explained, the decision tree 600 represents proper conditions for classifying multiple pieces of data to generate a causal graph and associates the causal graph with the leaves.

Fig. 6 is an explanatory diagram depicting an example of the structure of the decision tree 600. The decision tree 600 includes, for example, multiple nodes. Among the multiple nodes, each node other than the leaves represents an element forming a condition. The leaf node, for example, represents a causal graph in an identifiable manner. The leaf node, for example, represents an identifier of a causal graph or the like. The leaf node may, for example, represent an address of a storage area for storing the causal graph. The decision tree 600 represents a condition, for example, by a path from the root to the leaves. The decision tree 600 for example represents a condition by a combination of elements represented by nodes other than the leaves on the path from the root to the leaves.

In the example of Fig. 6, the decision tree 600 includes nodes 601 to 605. The node 601 is the root. The node 601 represents an element for determining whether gender is male. The node 602 represents an element for determining whether age is over 40 years old. The nodes 603 to 605 are leaves. In the decision tree 600, a path from the root node 601 to the leaf node 603 represents a condition that gender is not male. The node 603 represents a causal graph 611 corresponding to the condition that gender is not male.

In the decision tree 600, a path from the root node 601 to the leaf node 604 represents a condition that gender is male and age is 40 years old or less. The node 604 represents a causal graph 612 corresponding to the condition that gender is male and age is 40 years old or less. In the decision tree 600, a path from the root node 601 to the leaf node 605 represents a condition that gender is male and age is over 40 years old. The node 605 represents a causal graph 613 corresponding to the conditions that the gender is male and the age is over 40 years old.

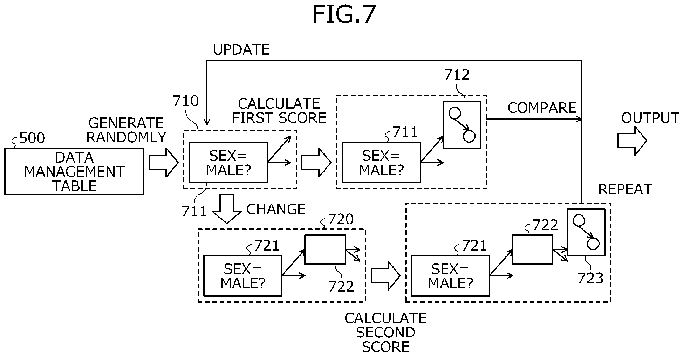

The information processing device 100 can express multiple conditions for classifying multiple pieces of data to generate a causal graph by using the decision tree 600, and can set multiple conditions exclusively. The information processing device 100 can optimize the decision tree 600 by updating the decision tree 600 so as to improve the accuracy of the causal graph corresponding to each leaf of the decision tree 600, and can properly set multiple conditions for classifying multiple pieces of data to generate a causal graph. Next, an example of operation of the information processing device 100 for optimizing the decision tree 600 is described with reference to Fig. 7.

Fig. 7 is an explanatory diagram depicting an example of the operation of the information processing device 100. In Fig. 7, the information processing device 100 obtains multiple pieces of data from the data management table 500.

(7-1) The information processing device 100 generates a first decision tree 710 representing, for example, a random condition. The information processing device 100 generates a first causal graph corresponding to each leaf of the first decision tree 710. The first decision tree 710 includes nodes 711, 712, etc. The node 711 represents an element forming a condition. The node 712 represents the first causal graph. The information processing device 100 calculates a first score for evaluating the likelihood of the first causal graph for the first decision tree 710, based on the first causal graph corresponding to each leaf of the first decision tree 710.

The first score indicates, for example, that the smaller is the value, the better is the evaluation. For example, the first score indicates that the smaller is the absolute value of the difference of a data matrix representing multiple piece of data and the product of the data matrix and the adjacency matrix of the first causal graph, the better is the evaluation. For example, the first score is a statistic value of ∥X-XW_1∥^2 corresponding to the first causal graph. X is a data matrix representing multiple pieces of data. W_1 is an adjacency matrix of the first causal graph. The statistical value of ∥X-XW_1∥^2 is the maximum value, minimum value, average value, median value, or mode value of ∥X-XW_1∥^2 corresponding to each first causal graph.

The information processing device 100 repeatedly executes the process of (7-2) below until a predetermined end condition is satisfied. The predetermined end condition is, for example, executing the process of (7-2) below a specified number of times. The predetermined end condition may be, for example, that the first score becomes less than a predetermined threshold value. The predetermined end condition may be, for example, that the elapsed time since the process of (7-2) below was first executed exceeds an allowable time. The predetermined end condition may be, for example, that the number of conditions represented by the first decision tree becomes at least equal to a predetermined threshold value.

(7-2) The information processing device 100 generates a second decision tree 720 by randomly changing the current first decision tree 710. The information processing device 100 generates a second causal graph corresponding to each leaf of the second decision tree 720. The second decision tree 720 includes nodes 721 to 723. The nodes 721 and 722 represent elements forming a condition. The node 723 represents the second causal graph. The information processing device 100 calculates a second score for evaluating the likelihood of the second causal graph for the second decision tree 720 based on the second causal graph corresponding to each leaf of the second decision tree 720.

The second score indicates, for example, that the smaller is the value, the better is the evaluation. The second score indicates, for example, that the smaller is the absolute value of the difference of a matrix representing multiple pieces of data and the product of the data matrix and the adjacency matrix of the second causal graph, the better is the evaluation. For example, the second score is a statistical value of ∥X-XW_2∥^2 corresponding to the second causal graph. X is a data matrix representing multiple pieces of data. W_2 is an adjacency matrix of the second causal graph. The statistical value of ∥X-XW_2∥^2 is the maximum value, minimum value, average value, median value, or mode value of ∥X-XW_2∥^2 corresponding to each second causal graph.

When the second score indicates a better evaluation than the first score, the information processing device 100 updates the first decision tree 710 with the second decision tree 720. In addition to updating the first decision tree 710 with the second decision tree 720, the information processing device 100 sets the generated second causal graph as the first causal graph corresponding to each leaf of the first decision tree 710. In addition, to updating the first decision tree 710 with the second decision tree 720, the information processing device 100 updates the first score with the second score. In this way, the information processing device 100 can optimize the first decision tree 710.

(7-3) When a predetermined end condition is satisfied, the information processing device 100 outputs the final first decision tree 710 in which the first causal graph is associated with each leaf as the decision tree 600 representing proper conditions for classifying multiple pieces of data and generating a causal graph so that the user can refer to it. In this way, the information processing device 100 can make available to the user multiple proper conditions for classifying multiple pieces of data and generating a causal graph. The information processing device 100 can obtain multiple causal graphs by condition, the obtained causal graphs being more accurate than a single causal graph for the multiple pieces of data overall.

The information processing device 100 can enable the user to refer to the causal graph by condition. The information processing device 100 can make it possible for the user to refer to what kind of causal relationship exists between items by condition. For example, it is assumed that the user refers to the decision tree 600 depicted in Fig. 6. The user can grasp the causal relationship between items by referring to the decision tree 600 depicted in Fig. 6 and can consider measures for reducing the risk of separation from employment, according to an exclusive condition.

Here, "A" in the decision tree 600 represents career orientation. "B" in the decision tree 600 represents overtime hours. "C" in the decision tree 600 represents the risk of separation from employment. "D" in the decision tree 600 represents the salary difference with other companies in the same industry. Therefore, for example, the user can consider reducing overtime hours as a measure to reduce the risk of separation from employment for women. For example, the user can consider increasing the salary of men under the age of 40 as a measure to reduce the risk of separation from employment.

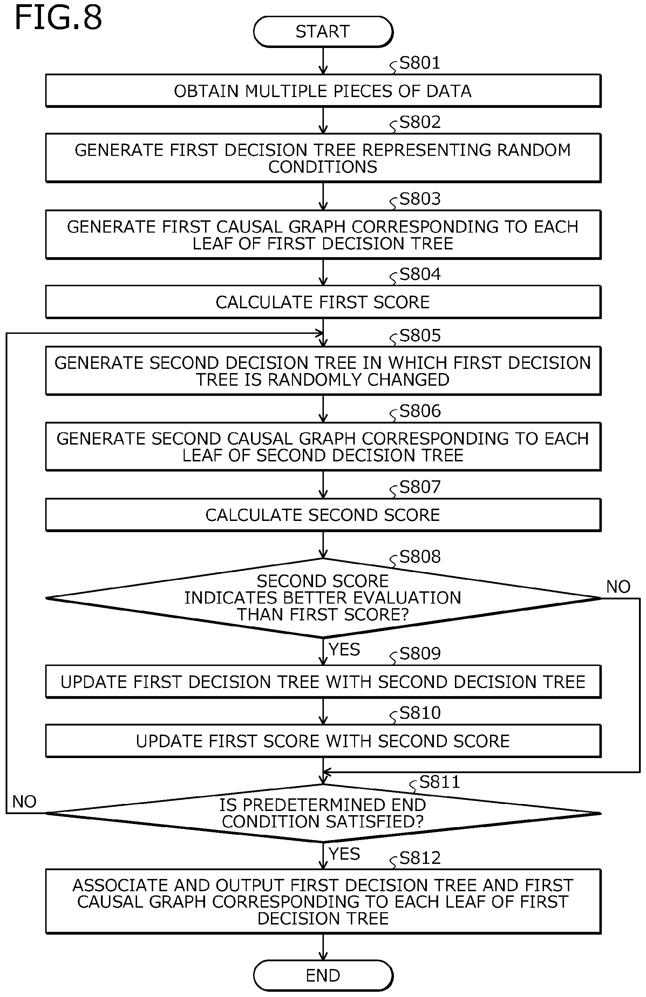

Next, an example of an overall processing procedure executed by the information processing device 100 is described with reference to Fig. 8. The overall processing is realized by, for example, the CPU 301 depicted in Fig. 3, storage areas such as the memory 302 and the recording medium 305, and the network I/F 303.

Fig. 8 is a flowchart depicting an example of an overall processing procedure. In Fig. 8, the information processing device 100 obtains multiple pieces of data (step S801). Then, the information processing device 100 generates a first decision tree representing random conditions, based on the multiple pieces of data (step S802).

Next, the information processing device 100 generates a first causal graph corresponding to each leaf of the first decision tree, based on data that, among the multiple pieces of data, corresponds to the conditions corresponding to each leaf of the generated first decision tree (step S803). Then, the information processing device 100 calculates a first score for evaluating the likelihood of the generated first causal graph (step S804).

Next, the information processing device 100 generates a second decision tree by randomly changing the first decision tree (step S805). Then, the information processing device 100 generates a second causal graph corresponding to each leaf of the second decision tree, based on data that among the multiple pieces of data, corresponds to the conditions corresponding to each leaf of the generated second decision tree (step S806). Thereafter, the information processing device 100 calculates a second score for evaluating the likelihood of the generated second causal graph (step S807).

Next, the information processing device 100 judges whether the second score indicates a better evaluation than the first score (step S808). Here, when the first score indicates a better evaluation than the second score (step S808: NO), the information processing device 100 proceeds to the processing at step S811. On the other hand, when the second score indicates a better evaluation than the first score (step S808: YES), the information processing device 100 proceeds to the processing at step S809.

At step S809, the information processing device 100 updates the first decision tree with the second decision tree (step S809). Next, the information processing device 100 updates the first score with the second score (step S810). Then, the information processing device 100 proceeds to the processing at step S811.

At step S811, the information processing device 100 judges whether a predetermined end condition is satisfied (step S811). Here, when the predetermined end condition is not satisfied (step S811: NO), the information processing device 100 returns to the processing at step S805. On the other hand, when the predetermined end condition is satisfied (step S811: YES), the information processing device 100 proceeds to the processing at step S812.

At step S812, the information processing device 100 associates and outputs the first decision tree and the first causal graph corresponding to each leaf of the first decision tree (step S812). Then, the information processing device 100 ends the entire process. Thus, the information processing device 100 can update the first decision tree so as to represent multiple proper conditions for classifying multiple pieces of data and generating a causal graph.

As described, according to the information processing device 100, it is possible to obtain a first decision tree that represents the conditions for classifying multiple pieces of data that are the basis for generating a causal graph as a path from the root to the leaves. According to the information processing device 100, for a first decision tree, for each path from the root to the leaves of the first decision tree, a first causal graph can be generated based on data, that among the multiple pieces of data, corresponds to a condition represented by the path. According to the information processing device 100, for a second decision tree different from the first decision tree, for each path from the root to the leaves of the second decision tree, a second causal graph can be generated based on data, that among the multiple pieces of data, corresponds to a condition represented by the path. According to the information processing device 100, when a second score for evaluating the likelihood of the generated second causal graph indicates a better evaluation than a first score for evaluating the likelihood of the first causal graph, the first decision tree can be updated with the second decision tree. According to the information processing device 100, a series of processes for generating a second decision tree, generating a second causal graph, and updating the first decision tree with the second decision tree when the second score indicates a better evaluation than the first score can be repeatedly executed until a predetermined end condition is satisfied. Thus, the information processing device 100 can set multiple proper conditions for classifying multiple pieces of data and generating a causal graph.

According to the information processing device 100, it is possible to generate a second decision tree in which a part of the first decision tree is changed. As a result, the information processing device 100 can properly generate candidates for updating the first decision tree, thereby facilitating the updating of the first decision tree.

According to the information processing device 100, when a predetermined end condition is satisfied, it is possible to output an updated first decision tree. As a result, the information processing device 100 can make available externally the multiple proper conditions for classifying multiple pieces of data and generating a causal graph.

According to the information processing device 100, it is further possible to output a first causal graph generated based on data that among multiple pieces of data, corresponds to a condition represented by a path from the root to a leaf of the first decision tree, the first causa graph being output in association with the leaf of the first decision tree. As a result, the information processing device 100 can make available externally, a first causal graph corresponding to each of multiple proper conditions for classifying multiple pieces of data and generating a causal graph.

According to the information processing device 100, it is possible to use a first score indicating that the evaluation is better the smaller is the absolute difference of a data matrix representing multiple pieces of data and the product of the data matrix and an adjacency matrix of a first causal graph. According to the information processing device 100, it is possible to use a second score indicating that the evaluation is better the smaller is the absolute difference of a data matrix and the product of the data matrix and an adjacency matrix of a second causal graph. This allows the information processing device 100 to properly evaluate the first decision tree and the second decision tree, and to properly determine whether to update the first decision tree with the second decision tree.

According to the information processing device 100, it is possible to generate a second decision tree by adding a node representing an element forming a condition to the first decision tree, deleting a node representing an element forming a condition, or changing an element forming a condition represented by a node. This allows the information processing device 100 to properly generate various second decision trees, and to easily improve the accuracy of the first decision tree.

According to the information processing device 100, it is possible to set the series of processes to be executed a specified number of times as a predetermined end condition. This allows the information processing device 100 to improve the accuracy of the first decision tree. The information processing device 100 can control the processing time required to improve the accuracy of the first decision tree.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto optical (MO) disc, a digital versatile disc (DVD), etc., read out from the computer-readable medium, and executed by the computer. The program may be distributed through a network such as the Internet.

According to one aspect, it is possible to set a proper condition for generating a causal graph.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A computer-readable recording medium storing therein, a program for causing a computer to execute a process for processing information for a first decision tree (110) and a second decision tree (120) that are mutually different, the first decision tree representing, by a path from a root to a leaf, a condition for classifying a plurality of data from which a causal graph is to be generated, the second decision tree being based on the first decision tree, the process comprising:
generating a first causal graph (111), for each path from the root to a leaf of the first decision tree, based on data that among the plurality of data, meets the condition represented by the path; and
after generating the first causal graph, repeatedly performing until a predetermined end condition is satisfied:
generating a second causal graph (121), for each path from the root to a leaf of the second decision tree, based on the data that among the plurality of data, meets the condition represented by the path; and
updating the first decision tree with the second decision tree when a second score (132) evaluating a likelihood of the generated second causal graph is better than a first score (131) evaluating a likelihood of the first causal graph.

2. The recording medium according to claim 1, wherein
the second decision tree is a decision tree obtained by modifying a part of the first decision tree.

3. The recording medium according to claim 2, the process further comprising
outputting the updated first decision tree when the predetermined end condition is satisfied.

4. The recording medium according to claim 3, wherein
the outputting includes outputting the first causal graph generated based on the data that, among the plurality of data, satisfies the condition represented by the path from the root to a leaf of the first decision tree, the first causal graph being output in association with the leaf of the first decision tree.

5. The recording medium according to any one of claims 1 to 4, wherein
the first score indicates a better evaluation a smaller is an absolute value of a difference of a data matrix representing the plurality of data and a product of the data matrix and an adjacency matrix of the first causal graph, and
the second score indicates a better evaluation, a smaller is an absolute value of a difference of the data matrix and a product of the data matrix and an adjacency matrix of the second causal graph.

6. The recording medium according to claim 1, wherein
the second decision tree is a decision tree obtained by modifying all or a part of the first decision tree by adding a node representing an element that forms a condition, deleting a node representing an element that forms a condition, or changing the element that forms the condition represented by the node.

7. The recording medium according to any one of claims 1 to 6, wherein
the predetermined end condition is execution of the process a specified number of times.

8. A method for processing information for a first decision tree and a second decision tree that are mutually different, the first decision tree representing, by a path from a root to a leaf, a condition for classifying a plurality of data from which a causal graph is to be generated, the second decision tree being based on the first decision tree, the method being executed by a computer and comprising:
generating a first causal graph, for each path from the root to a leaf of the first decision tree, based on data that among the plurality of data, meets the condition represented by the path; and
after generating the first causal graph, repeatedly performing until a predetermined end condition is satisfied:
generating a second causal graph, for each path from the root to a leaf of the second decision tree, based on the data that among the plurality of data, meets the condition represented by the path; and
updating the first decision tree with the second decision tree when a second score evaluating a likelihood of the generated second causal graph is better than a first score evaluating a likelihood of the first causal graph.

9. An information processing device (100) for processing information for a first decision tree and a second decision tree that are mutually different, the first decision tree representing, by a path from a root to a leaf, a condition for classifying a plurality of data from which a causal graph is to be generated, the second decision tree being based on the first decision tree, the information processing device comprising:
a memory; and
a processor coupled to the memory, the processor being configured to:
generate a first causal graph, for each path from the root to a leaf of the first decision tree, based on data that among the plurality of data, meets the condition represented by the path; and
after generating the first causal graph, repeatedly perform until a predetermined end condition is satisfied:
generating a second causal graph, for each path from the root to a leaf of the second decision tree, based on the data that among the plurality of data, meets the condition represented by the path; and
updating the first decision tree with the second decision tree when a second score evaluating a likelihood of the generated second causal graph is better than a first score evaluating a likelihood of the first causal graph.
